# EUROPEAN PATENT APPLICATION

(11) **EP 2 278 517 A2**
(43) Date of publication of application: **26.01.2011**
(21) Application number: 10166773.1
(22) Date of filing: 22.06.2010
(51) Int. Cl.: G06F 21/00

(54) **System and method for piracy reduction in software activation**

(30) Priority: 22.06.2009 US 219076 P
(71) Applicant: Uniloc USA, Inc., Irvine, CA 92612 (US)
(72) Inventor: Etchegoyen, Craig Stephen, Irvine, CA 92612 (US)
(74) Representative: Casbon, Paul Richard

(57) **Abstract**

A method for reducing piracy in software activation may be implemented on a computer readable medium storing software instructions that execute the method, which includes steps for receiving a media identifier of a media and a device identifier from a first remote device executing the media, the device identifier being based on a combination of a user-configurable parameter and a non-user-configurable parameter of the first remote device, granting a usage license for the media to the first remote device, correlating the usage license with the media identifier and the device identifier, generating a sale metric for the media based on a number of usage license granted, determining a piracy metric of the media based on availability of illegal copies of the media, and charging a publisher of the media a fee based on the sale and piracy metrics.

## Description

This application claims priority to U.S. Application 61/219,076, which was filed June 22, 2009, and which is fully incorporated herein by reference.

### BACKGROUND OF THE INVENTION

### Field of the Invention

The present invention is directed toward systems for media activation, and related methods.

### Description of the Related Art

Media, such as software (computer games and video games) and music, are typically sold on a physical medium like an optical disc. This form of media distribution is commonly practiced, but prone to piracy. Software and music piracy continue to increase at an alarming rate, particularly in countries with emerging economies. Global revenue losses due to software piracy grew from $8 billion to nearly $48 billion worldwide in 2007 and 21% of software in the United States is unlicensed, mostly as a result of over-installation. Piracy around the rest of the world is even worse. Yet despite these substantial losses, in the past few years many software development groups have asked themselves whether copy protection and license management schemes are really worth the trouble, trouble that often involves: the alienation of good customers due to restrictive activation schemes involving DRM, root-kits, or disc-locking; the difficulty of implementing many solutions; and the increased support costs for customers locked out by cumbersome license keys or overzealous licensing rules.

To prevent or reduce piracy, software developers require the software CD to be present in the CD drive in order for the software to fully execute or be functional. Still, software pirates have found ways to bypass such security measures and to install unauthorized copies of media on multiple machines. Accordingly, it would be desirable to provide a technique for software distribution that will greatly reduce piracy.

### SUMMARY OF THE INVENTION

The following presents a simplified summary of one or more embodiments in order to provide a basic understanding of such embodiments. This summary is not an extensive overview of all contemplated embodiments, and is intended to neither identify key or critical elements of all embodiments nor delineate the scope of any or all embodiments. Its sole purpose is to present some concepts of one or more embodiments in a simplified form as a prelude to the more detailed description that is presented later.

In accordance with one or more embodiments and corresponding disclosure thereof, various aspects for activating a media are described. The method comprising: receiving a software identifier of a software and a device identifier from a first remote device executing the software, the device identifier being based on a combination of at least one user-configurable parameter and at least one non-user-configurable parameter of the first remote device; granting a usage license for the software to the first remote device; correlating the usage license with the software identifier and the device identifier; generating a sale metric for the software based on a number of usage license granted; determining a piracy metric of the software based on availability of illegal copies of the software; and charging a publisher of the software a fee based on the sale and piracy metrics. The media being activated may be a computer software, a movie, music, book, or other types of entertainment media.

The piracy metric may be determined by evaluating the availability of illegal copies of the software on a public network such as the Internet. The piracy metric may also be determined by estimating the number of illegally downloaded copies of the software on a peer-to-peer network or on torrent sites and applications.

In one embodiment, the non-user-configurable parameter may be generated using a carbon degradation characteristic of a computer chip of the device. The non-user-configurable parameter may be generated using a carbon degradation characteristic of a computer chip of the device. The non-user-configurable parameter may be generated using a silicone degradation characteristic of a computer chip of the device. Further, the user-configurable parameter may comprise one of hard disk volume name, user name, device name, user password, and hard disk initialization date for the device.

In the method described above, the device identifier may be generated by utilizing an irreversible transformation on one or more of the user-configurable parameter and the non-user-configurable parameter of the device. The device identifier may also be generated by utilizing a cryptographic hash function on one or more of the user-configurable parameter and the non-user-configurable parameter of the device.

In accordance with one or more embodiments of the present invention, an apparatus for software activation is described. The apparatus may include: means for receiving a software identifier of a software and a device identifier from a first remote device executing the software, the device identifier being based on a combination of at least one user-configurable parameter and at least one non-user-configurable parameter of the first remote device; means for granting a usage license for the software to the first remote device; means for correlating the usage license with the software identifier and the device identifier; means for generating a sale metric for the software based on a number of usage license granted; means for determining a piracy metric of the software based on availability of illegal copies of the software; and means for charging a publisher of the software a fee based on the sale and piracy metrics.

In accordance with yet another embodiment of the present invention a computer readable medium is provided. The computer readable medium having stored thereon, computer executable instructions that, if executed by a device, cause the device to perform a method comprising: receiving a software identifier of a software and a device identifier from a first remote device executing the software, the device identifier being based on a combination of at least one user-configurable parameter and at least one non-user-configurable parameter of the first remote device; granting a usage license for the software to the first remote device; correlating the usage license with the software identifier and the device identifier; generating a sale metric for the software based on a number of usage license granted; determining a piracy metric of the software based on availability of illegal copies of the software; and charging a publisher of the software a fee based on the sale and piracy metrics.

To the accomplishment of the foregoing and related ends, the one or more embodiments comprise the features hereinafter fully described and particularly pointed out in the claims. The following description and the annexed drawings set forth in detail certain illustrative aspects of the one or more embodiments. These aspects are indicative, however, of but a few of the various ways in which the principles of various embodiments may be employed and the described embodiments are intended to include all such aspects and their equivalents.

### BRIEF DESCRIPTION OF THE DRAWINGS

FIG. 1 is a block diagram illustrating an environment with which the media sharing method can be implemented according to one embodiment of the present invention.

FIG. 2 is a block diagram showing memory allocation for a device identifier used in accordance with the present invention.

FIG. 3 is a flow chart illustrating one embodiment of a media activation method according to the present invention.

FIG. 4 is a flow chart illustrating another embodiment of a media activation method according to the present invention.

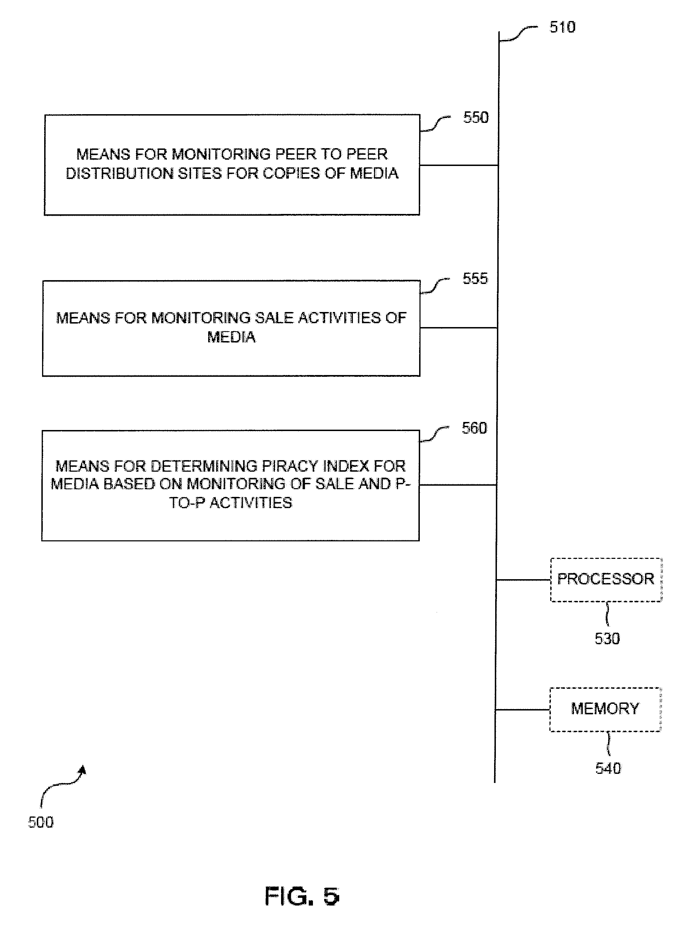

FIG. 5 is a block diagram illustrating a computing system with which software components can be executed to perform the media activation method according to one or more embodiments of the present invention.

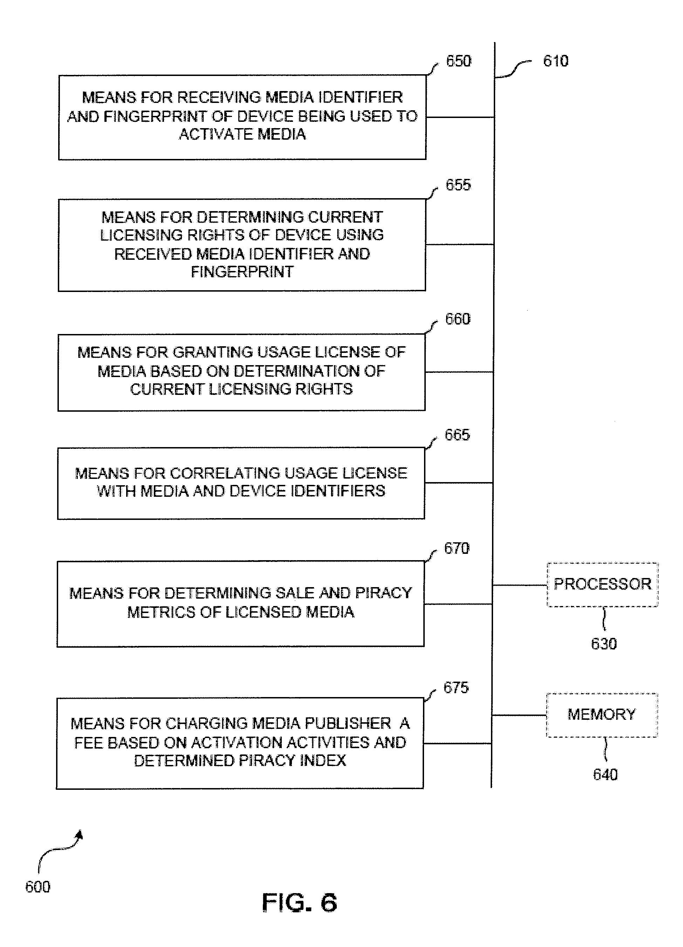

FIG. 6 is a block diagram illustrating another computing systems with which software components can be executed to perform the media activation method according to one or more embodiments of the present invention.

### DETAILED DESCRIPTION

The present invention addresses the need for a software activation service that provides reliable software activation, tracking, managing and auditing of software licenses. The invention also provides game owners, publishers, and/or license authorities tools to track how many copies of their game are legitimate and/or unauthorized under the game licenses. Such an auditing service may be used alone, or in conjunction with other security/authentication measures.

Currently, there are two basic approaches to protecting intellectual property such as desktop software and games: copy protection and activation. Copy protection, which is at the core of most digital rights management (DRM) solutions, is an essentially passive approach that traces its roots back to physical disks and tapes and generally attempts to prevent a user from making unauthorized copies of a disk. The two most obvious failings of this approach are its unsuitability for the increasingly important ecommerce/digital distribution world, and the fact that most copy-protection schemes are easily broken. Once a scheme is broken, every game or desktop software program protected with that scheme becomes widely available to anyone who wants to download an illegal copy.

Software copy protection has come a long way from the early days of floppy disk physical copy protection. Even so, some companies shipping software on CD-ROMs or DVDs use a modern version of physical copy protection that writes data in non-standard ways making it difficult to make copies of the CD/DVD using normal processes. Unfortunately there are many tools available to bypass these measures, and once physical copy protection is cracked for one title, it's cracked for all titles using that mechanism.

Another way to copy protect a software is to use serial numbers. Typically, customers are provided with a serial number upon purchase of software and are required to type in or otherwise present the serial number during registration. Without this number, the software won't work. However, in these cases the serial number is simply validated by the application or game, and there is nothing to keep many people from using the same serial number (posting serial numbers or keys on the internet is common practice). Pirate key generation programs can also be used to generate counterfeit serial numbers that the application will accept as valid.

Yet another way to copy protect a software is to use dongles. This method requires customers to plug a piece of hardware into their computers to run software successfully. If the hardware isn't plugged in, the software won't initialize. This approach gets around the re-use of serial numbers, but is expensive and doesn't scale well for products with low price points or that are going to be installed on many machines in a corporate environment--making it only appropriate for certain kinds of software.

Yet another way to copy protect a software is to use Internet product activation. Customers connect to the internet and type in their serial numbers so that software can connect with the website of the company the developed it. In its simplest form, this method prevents other users from installing the software if they attempt to use the same serial number, and is a method used by leading desktop software companies. Product activation can also be used to manage the enforcement of complex licensing rules-such as feature-level licensing, time-based licenses, and quantity-based licenses. Most activation solutions also provide a fallback mechanism for the small percentage of users who cannot directly connect to the activation servers. Accordingly, it would be desirable to have a software distribution system that is secured, user friendly, and auditable by clients and/or administrators.

Activation generally focuses more on license management and the enforcement of contracts. While DRM is fundamentally restrictive, activation is fundamentally permissive, meaning that the goal is to provide access to right things to the right people at the right time. Because software activation is interactive, it can also be used not just for enforcement of existing licensing, but also as a tool in managing compliance on behalf of both the buyer and the seller. In many cases, rather than preventing users from copying the media, the company may want to encourage them to distribute it internally and externally while retaining control over what people are doing so more revenue could be collected.

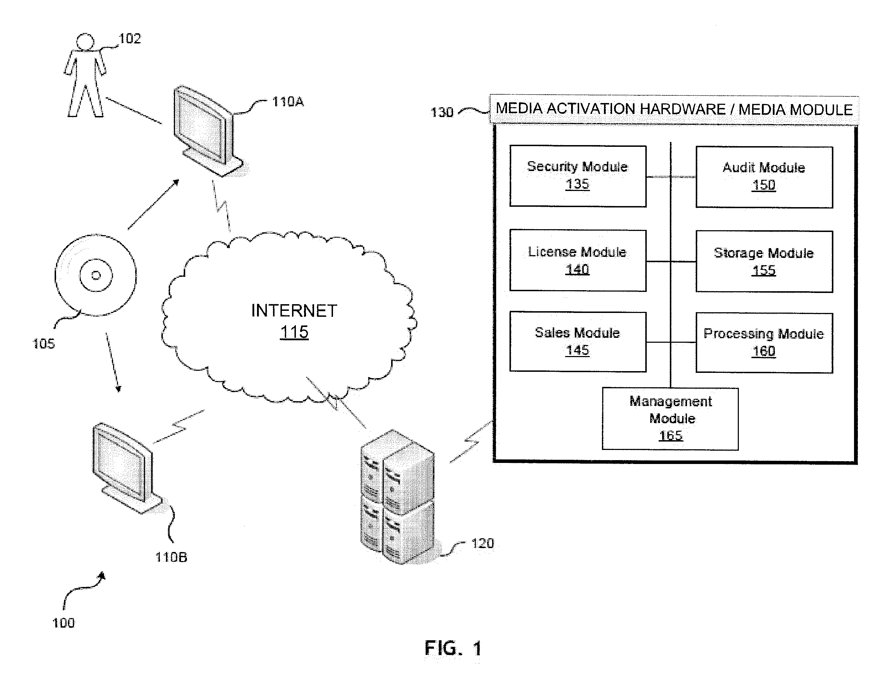

Before describing the invention in further detail it is useful to describe an example environment with which the invention can be implemented. FIG. 1 is a diagram illustrating an example environment 100 with which the media sharing method, system, and apparatus is implemented according to one or more embodiments of the present invention. The illustrated example environment 100 includes a user 102, a storage medium 105, computing devices 110A and 110B, a network 115, a media management server 120, and a software/hardware module 130. Storage medium 105 may be an optical disc, a memory device (e.g., flash memory), a magnetic storage medium, or other storage device not yet contemplated. Storage medium 105 may comprise media content such as books, music, movies, software applications, or combinations thereof. In one embodiment, the media content may be digitally distributed or streamed from a server. Network 115 may comprise the Internet, a local area network, or other form of communication network.

Storage medium 105 may be distributed free of charge to user 102. In one embodiment, medium 105 contains various software applications and music that user 102 may install on to user's computing device 110. For example, medium 105 may contain a "xyz action movie", as well as a computer game and soundtrack for the "xyz action movie". Once user 102 inserts medium 105 into user's computing device 110 (e.g., a personal computer, laptop, or gaming device), the media activation application embedded within medium 105 will give user 102 a choice to install all of the media on medium 105 or just the computer game of the "xyz action movie", for example. In one embodiment, each of the media on medium 105, once installed, is defaulted to a trial mode. It should be noted that media content can also be downloaded via network 115. For example, user 102 may elect to download a media rather than waiting for the physical medium (e.g., a CD) to arrive in the mail or to purchase one at a store.

In the trial mode, user 102 will be restricted to some of the features and functionalities of the media. For example, if a movie or a song is installed, then user 102 will only be able to view or listen to a portion of the movie or song. If the media is a computer video game, then user 102 will only be able to play a portion of the game. Alternatively, all functionalities of the media are fully accessible only for a limited number of hours or days. Once the user has purchased the full software, the user may be asked to join the exchange club. Alternatively, the user may be asked to join the exchange club regardless of the license status of the installed media. In this way, the user may broadcast the media that he/she likes but could not afford to purchase at the moment.

Computing devices 110A-B may be in operative communication with media management server 120. While only one computing device 110 is illustrated, it will be understood that a given system may comprise any number of computing devices. Computing device 110 may be, but is not limited to, a game console, a personal computer, a server computer, a laptop computer, a tablet computer, a personal digital assistant, a mobile phone, a wireless communication device, an onboard vehicle computer, or any other device capable of communication with a computer network.

Computing device 110 may contain one or more media (e.g., computer software, music, books, and movies) that require a license to be authorized for use or a key to enable the user to download or fully use the media. Computing device 110 may also comprise a media activation application (not shown) that may comprise a stand alone application or an applet running within a web browser on the device 110 (e.g., an applet comprising executable code for a Java Virtual Machine). The media activation application may be embedded in or associated with another software application, including but not limited to the media. For example, media activation application may be embedded in or associated with a tool bar of a software application, such as, for example, a web browser. Alternatively, the media activation application may be installed in conjunction with a media (e.g., software application, books, movies, etc.) that was installed or downloaded onto user's computing device 110. The media activation application may prompt the user to activate with an online software activation service.

The media activation application may collect information regarding computing device 110 by checking a number of parameters which are expected to be unique to the computing device environment. The parameters checked may include, for example, hard disk volume name, user name, device name, user password, hard disk initialization date, etc. The collected information may include information that identifies the hardware comprising the platform on which the web browser runs, such as, for example, CPU number, or other parameters associated with the firmware in use. The system information may further include system configuration information, such as amount of memory, type of processor, software or operating system serial number, etc.

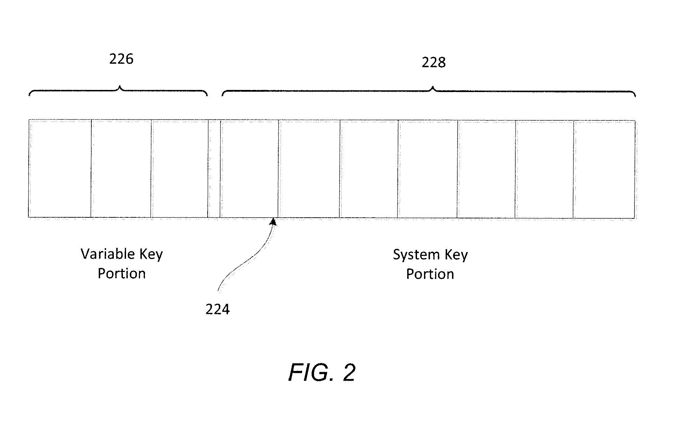

Based on the collected information, the media activation application may generate a device identifier 224 (see FIG. 2) that is unique to the user's computing device 110. The device identifier 224 may be stored in a hidden directory of the device 110 and/or at a remote location, such as the media management server 120. The device identifier 224 may incorporate the device's IP address and/or other geo-location code to add another layer of specificity to device's unique identifier.

It is noted that an application (e.g., the media activation application ) running on the computing device or otherwise having access to the computing device's hardware and file system may generate a unique device identifier (e.g., device identifier 224) using a process that operates on data indicative of the computing device's configuration and hardware. The device identifier may be generated using a combination of user-configurable and non-user-configurable machine parameters as input to a process that results in the device identifier, which may be expressed in digital data as a binary number. Each machine parameter is data determined by a hardware component, software component, or data component specific to the device that the unique identifier pertains to. Machine parameters may be selected based on the target device system configuration such that the resulting device identifier has a very high probability (e.g., greater than 99.999%) of being unique to the target device. In addition, the machine parameters may be selected such that the device identifier includes at least a stable unique portion up to and including the entire identifier that has a very high probability of remaining unchanged during normal operation of the target device. Thus, the resulting device identifier should be highly specific, unique, reproducible and stable as a result of properly selecting the machine parameters.

The application for generating the device identifier may also operate on the collected parameters with one or more algorithms to generate the device identifier. This process may include at least one irreversible transformation, such as, for example, a cryptographic hash function, such that the input machine parameters cannot be derived from the resulting device identifier. Each device identifier, to a very high degree of certainty, cannot be generated except by the suitably configured application operating or otherwise having had access to the same computing device for which the device identifier was first generated. Conversely, each identifier, again to a very high degree of certainty, can be successfully reproduced by the suitably configured application operating or otherwise having access to the same computing device on which the identifier was first generated.

The application may operate by performing a system scan to determine a present configuration of the computing device. The application may then select the machine parameters to be used as input for generating the unique device identifier. Selection of parameters may vary depending on the system configuration. Once the parameters are selected, the application may generate the identifier.

Further, generating the device identifier may also be described as generating a device fingerprint and may entail the sampling of physical, non-user configurable properties as well as a variety of additional parameters such as uniquely generated hashes and time sensitive values. Physical device parameters available for sampling may include, for example, unique manufacturer characteristics, carbon and silicone degradation and small device failures.

The process of measuring carbon and silicone degradation may be accomplished by measuring a chip's ability to process complex mathematical computations, and its ability to respond to intensive time variable computations. These processes measure how fast electricity travels through the carbon. Using variable offsets to compensate for factors such as heat and additional stresses placed on a chip during the sampling process allows for each and every benchmark to reproduce the expected values. During a standard operating lifetime, the process of passing electricity through the various switches causes a computer chip to degrade. These degradations manifest as gradually slower speeds that extend the processing time required to compute various benchmarking algorithms.

In addition to the chip benchmarking and degradation measurements, the process for generating a device identifier may include measuring physical, non-user-configurable characteristics of disk drives and solid state memory devices. Each data storage device has a large variety of damage and unusable data sectors that are nearly unique to each physical unit. The ability to measure and compare values for damaged sectors and data storage failures provides a method for identifying storage devices.

Device parameter sampling, damage measurement and chip benchmarking make up just a part of device fingerprinting technologies described herein. These tools may be further extended by the use of complex encryption algorithms to convolute the device identifier values during transmission and comparisons. Such encryption processes may be used in conjunction with random sampling and key generations.

The device identifier may be generated by utilizing machine parameters associated with one or more of the following: machine model; machine serial number; machine copyright; machine ROM version; machine bus speed; machine details; machine manufacturer; machine ROM release date; machine ROM size; machine UUID; and machine service tag.

The device identifier may also be generated by utilizing machine parameters associated with one or more of the following: CPU ID; CPU model; CPU details; CPU actual speed; CPU family; CPU manufacturer; CPU voltage; and CPU external clock.

The device identifier may also be generated by utilizing machine parameters associated with one or more of the following: memory model; memory slots; memory total; and memory details.

The device identifier may also be generated by utilizing machine parameters associated with one or more of the following: video model; video details; display model; display details; audio model; and audio details.

The device identifier may also be generated by utilizing machine parameters associated with one or more of the following: network model; network address; Bluetooth address; Blackbox model; Blackbox serial; Blackbox details; Blackbox damage map; Blackbox volume name; NetStore details; and NetStore volume name.

The device identifier may also be generated by utilizing machine parameters associated with one or more of the following: optical model; optical serial; optical details; keyboard model; keyboard details; mouse model; mouse details; printer details; and scanner details.

The device identifier may also be generated by utilizing machine parameters associated with one or more of the following: baseboard manufacturer; baseboard product name; baseboard version; baseboard serial number; and baseboard asset tag.

The device identifier may also be generated by utilizing machine parameters associated with one or more of the following: chassis manufacturer; chassis type; chassis version; and chassis serial number.

The device identifier may also be generated by utilizing machine parameters associated with one or more of the following: IDE controller; SATA controller; RAID controller; and SCSI controller.

The device identifier may also be generated by utilizing machine parameters associated with one or more of the following: port connector designator; port connector type; port connector port type; and system slot type.

The device identifier may also be generated by utilizing machine parameters associated with one or more of the following: cache level; cache size; cache max size; cache SRAM type; and cache error correction type.

The device identifier may also be generated by utilizing machine parameters associated with one or more of the following: fan; PCMCIA; modem; portable battery; tape drive; USB controller; and USB hub.

The device identifier may also be generated by utilizing machine parameters associated with one or more of the following: device model; device model IMEI; device model IMSI; and device model LCD.

The device identifier may also be generated by utilizing machine parameters associated with one or more of the following: wireless 802.11; webcam; game controller; silicone serial; and PCI controller.

With reference to FIG. 2, in one embodiment, the device identifier 224 may include two components - namely, a variable key portion 226 and a system key portion 228. The variable key portion 226 may be generated at the time of registration of computing device 110 by reference to a variable platform parameter, such as via reference to system time information, although other parameters which are variable may be utilized in other embodiments. The system key portion 228 may include the above described parameters expected to be unique to the device 110, such as, for example, hard disk volume name, user name, computer name, user password, hard disk initialization date, or combinations thereof. Portions 226 and/or 228 may be combined with the IP address and/or other platform parameters of the device 110. It is noted that device identifiers, or portions thereof, may be encrypted to add an additional layer of specificity and security.

Referring again to FIG. 1, media management server 120 may comprise a media activation software/hardware module 130, which may include a security module 135, a license module 140, a sales module 145, an audit module 150, a storage module 155, a processing module 160; and a management module 165. Security module 135 may be configured to authenticate device identifier 224 received from the media activation application on computing device 110. Sales module 145 may authenticate user's 102 financial data such as credit or debit card number, address, and membership number, if applicable. In one embodiment, device identifier 224 can be used as the membership number.

Security module 135 may check for information which is expected to be unique to the media, such as, for example, the media serial number. The collected media identifier may include the media serial number, product identification number, product key, etc. The collected media identifier may include information regarding where the media was sold or distributed, who the buyers, sellers, and/or distributors were, which stores the media was sold in, etc. It is noted that the media identifier may be unique to particular copy of media, such as when the media is licensed to a single user. In the alternative, the media identifier may be unique to particular type or group of a media, such as when the media is licensed to a defined group of users. It should be noted that a media may be a computer software, music, a book, or a movie.

In a scenario, once user 102 has purchased a usage license for a media (e.g., xyz movie) and the payment information is verified, license module 140 may generate a license key for the media. The key may allow the user to fully operate the media or allow the user to download a fully functional copy of the media from server 120.

License module 140 may generate a license key using one or more of the received device and media identifiers. The license key may be generated in ways such that it can be authenticated by the media activation application residing on user's computing device 110. Once the license key is authenticated by the media activation application, the full media or full functionalities of the media will be made accessible to user 102. Alternatively, the media activation application may direct user 102 to download the remaining portion of the media, if a full and/or completely accessible version of the media was not previously installed.

The embodiments described herein comprise a media activation application (not shown) being executed on computing device 110 that collects or generates a media identifier for media; however, it will be understood that the systems and components described herein can be adapted to collect one or more types of media identifiers for a plurality of media applications. The media identifier may be stored in a hidden directory of the device 110 and/or at a remote location, such as the media management server 120.

The media activation application of computing device 110 may also include a registration routine that collects or receives information regarding the geo-location code of the device 110. A geo-locater (not shown) may comprise the IP address or the like of the device 110.

The media activation application may electronically send the device identifier 224 and the media identifier to the media management server 120. In the alternative, a geo-location code, such as the IP address of the device 110, may be associated with the device identifier 224 and/or the media identifier and may sent to the media management server 120, such as via a secured network connection. The media management server 120 may encrypt and store the data, such as the device identifier 224, the media identifier 130, and/or the geo-location code, received from the computing device 110. The media management server 120 may receive such data from a plurality of computing devices and store the received data in storage module 155.

In one embodiment, the media activation application may generate an audit number by associating the media identifier with device identifier 224 and/or the geo-location code, and may send the generated audit number to the media management server 120. In another embodiment, media activation application of device 110 may send the device identifier 224, the media identifier, and/or the geo-location code to media management module 165 in a piecemeal manner. Media management module 165 may in turn generate the audit number 142. Media management module 165 may receive or generate audit numbers from a plurality of computing devices and store the received audit numbers in the storage module 155.

It is noted that the audit number may be generated from device identifier 224, the media identifier, and/or the geo-location code via any number of suitable approaches. For example, the media identifier may be concatenated or linked with device identifier 224 and/or the geo-location code. It is also noted that the audit number may be stored in a hidden directory of computing device 110 and/or at a remote location, such as the media management server 120. It is further noted that device identifier 224, the media identifier, and/or the geo-location code may be extracted from the audit number 142 at a later time.

When a user of a computing device, including but not limited to computing device 110, installed with the media activation application, attempts to run the media, the media activation application in response may transmit the media identifier associated with device identifier 224 and/or the geo-location code (or an audit number 142 generated from such data) to media management server 120, which in turn may store the received data in the storage module 155.

With reference once again to FIG. 1, the audit module 150 may also include a registration routine that collects or receives information regarding the software 120 on device 110 by checking information which is expected to be unique to software 120, such as, for example, the software serial number. The collected software identifier may include the software serial number, product identification number, product key, etc. The collected software identifier may include information regarding where the software was sold or distributed, who the buyers, sellers, and/or distributors were, which stores the software was sold in, etc. It is noted that the software identifier may be unique to particular copy of software, such as when the software is licensed to a single user. In the alternative, the software identifier may be unique to particular type or group of a software, such as when the software is licensed to a defined group of users.

The embodiments described herein comprise an audit module 150 that collects the software identifier 130 for software 120; however, it will be understood that the systems and components described herein can be adapted to collect one or more types of software identifiers for a plurality of software applications. The software identifier 130 may be stored in a hidden directory of the device 110 and/or at a remote location, such as the audit module 150.

The audit module 150 may also include a registration routine that collects or receives information regarding the geo-location code 140 of the device 110. The geo-locater 140 may comprise the IP address or the like of the device 110.

Audit module 150 may electronically send the device identifier 124 and the software identifier 130 to the audit module 150. In the alternative, a geo-location code 140, such as the IP address of the device 110, may be associated with the device identifier 124 and/or the software identifier 130 and may sent to the audit module 150, such as via a secured network connection. The audit module 150 may encrypt and store the data, such as the device identifier 124, the software identifier 130, and/or the geo-location code 140, received from the computing device 110. The audit module 150 may receive such data from a plurality of computing devices and store the received data in an audit database 114.

In one embodiment, the audit module 150 may generate an audit number 142 by associating the software identifier 130 with the device identifier 124 and/or geo-location code 140, and may send the generated audit number 142 to the audit module 150. In another embodiment, the application 122 may send the device identifier 124, the software identifier 130, and/or the geo-location code 140 to the server 112 in a piecemeal manner. The server 112 may in turn generate the audit number 142. The audit module 150 may receive or generate audit numbers from a plurality of computing devices and store the received audit numbers in the audit database 114.

It is noted that the audit number 142 may be generated from the device identifier 124, the software identifier 130, and/or the geo-location code 140 via any number of suitable approaches. For example, the software identifier 130 may be concatenated or linked with the device identifier 124 and/or geo-location code 140. It is also noted that the audit number 142 may be stored in a hidden directory of the device 110 and/or at a remote location, such as the audit module 150. It is further noted that the device identifier 124, the software identifier 130, and/or the geo-location code 140 may at a later time be extracted from the audit number 142.

When a user of a computing device, including but not limited to computing device 110, installed with audit module 150, attempts to run the software 120, the audit module 150 in response may transmit the software identifier 130 associated with the device identifier 124 and/or the geo-location code 140 (or an audit number 142 generated from such data) to the audit module 150, which in turn may store the received data in the audit database 114.

Current media distribution methods discourage users from sharing the media, particularly when the media is on a physical medium like an optical disc. Based on current systems, if user 102 lends a game disc to a friend, user 102 will be unable to play the game because most games require the disc to be in the device while playing. In the case of music, there is no incentive for users to distribute the optical disc to others because a reward system is not being implemented. In contrast, the reward system of the present invention encourages users to freely broadcast and share the media with others.

With reference to the embodiments of FIG. 1, the audit module 150 may be in operative communication with a management device 150, which may be any device capable of communication with a computer network, such as, for example, a personal computer, a server computer, a laptop computer, a tablet computer, a personal digital assistant, a mobile phone, or a wireless communication device. The management device 150 may comprise a management module 165, which may be any program or application, such as a stand alone application or an application that is embedded or associated with another software application, such as an applet running within a web browser on the device 150.

The management module 165 may be adapted to allow a user, such as, for example, a software manufacturer or distributor, to view the data collected and stored in the audit database 114 of the audit server 112. The present embodiment will be described in the context of a software manufacturer utilizing the management module 165. However, it will be understood that any user of the management device may utilize the management module 165.

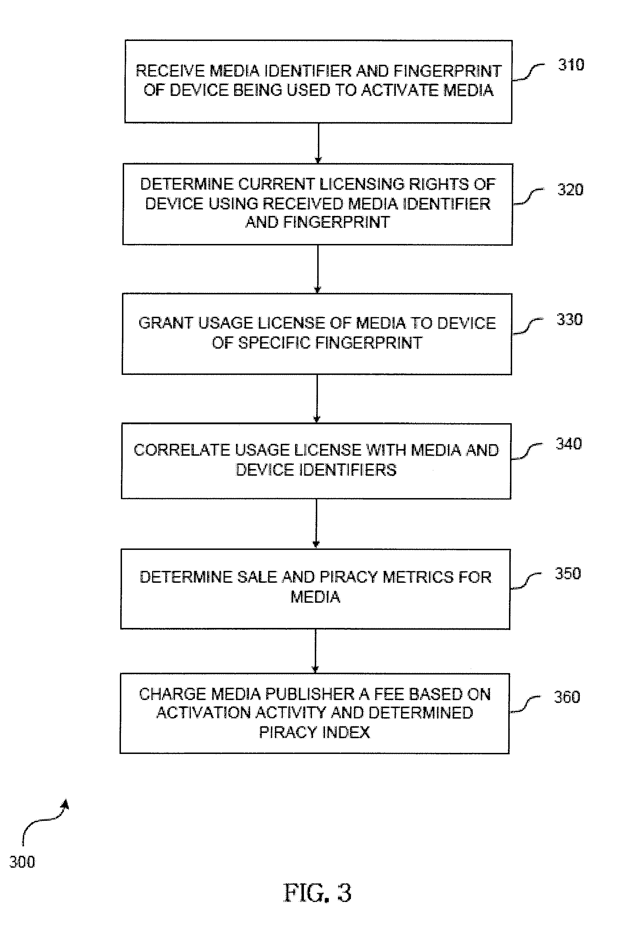

FIG. 3 illustrates an example process flow of a media activation method 300 according to one embodiment of the present invention. Method 300 starts at step 310 where a media identifier and fingerprint of the device being used to activate the media are received. At step 320, the current licensing right of the device that is attempting to use and/or activate the media is determined using the received media identifier and device's fingerprint. At step 330, a usage license of media is granted to the device having the received fingerprint.

At step 340, the usage license is correlated with the media and device identifiers. The correlation data may be stored in storage module 155. The correlation data may include date of sale, device identifier, software identifier, purchase price, length of license, type of license (e.g., limited or unlimited use, etc.), number of licensed device in household, income, financial data, age, geographic location, sex of user, number of users, etc.

At step 350, the sale and piracy metrics for the media are determined. The sale metric may be determined using market analysis or correlation data stored at step 340. The piracy metric may be generated by determining the availability of illegal copies of the media on a public network such as the Internet. The piracy metric may further be determined by estimating the number of illegally downloaded copies of the media on a torrent based applications. For example, a torrent or a well-known piracy website may be analyzed to find evidence of piracy on a specific media, such as a "xyz racing game." If for example, it is determined that in the past month 1000 copies of the "xyz racing game" have been illegally distributed, then a high score can be assigned to the piracy metric. Alternatively, if it is determined that only a dozen copies of the "xyz racing game" have been illegally distributed, then a low score can be assigned to the piracy metric. It should be noted that the piracy metric may also be determined using a third-party study.

At step 360, the publisher of the media publisher is charged a fee based on the activation activity and the determined piracy metric. If for example, the activation activity is high and the piracy metric is low, then a higher fee may be assessed.

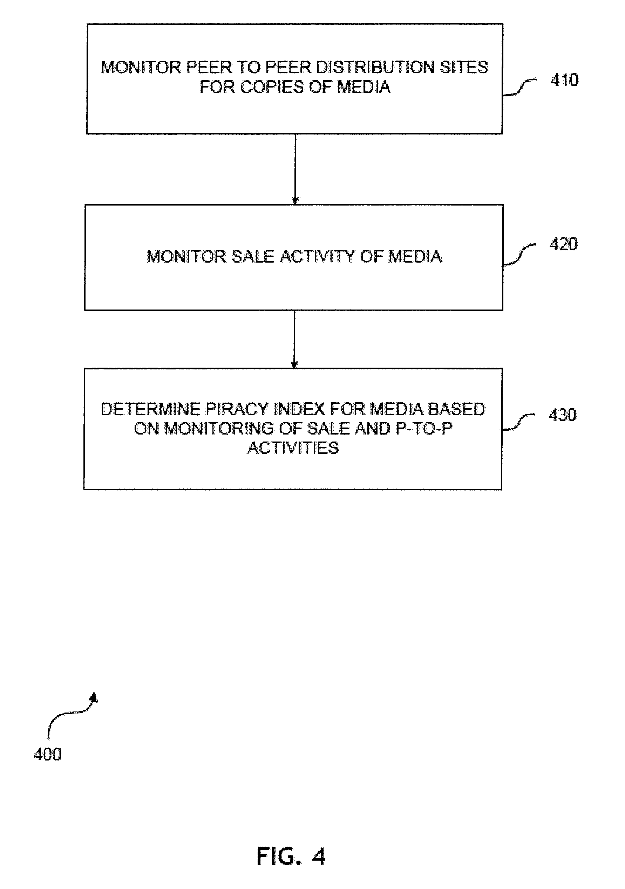

FIG. 4 illustrates an example process flow of a media activation method 400 according to one embodiment of the present invention. Method 400 starts at step 410 where peer-to-peer distribution sites and/or applications are monitored for unauthorized copies of the media. At step 420, the sale activity of the same media is determined. At step 430, the piracy index for the media is determined based on the monitoring of peer-to-peer sites and the sale activity.

In accordance with one or more embodiments of the present invention, there is provided an exemplary apparatus 500 that may be configured as either a computing device, or as a processor or similar device for use within a computing device. As illustrated, apparatus 500 may include: a means for monitoring peer-to-peer distribution sites for illegal distribution activities of the media; a means for determining sale activity of the media; and a means for generating a piracy score or metric based on the sale activity and the monitoring of peer-to-peer sites.

It is noted that apparatus 500 may optionally include a processor module 530 having at least one processor, in the case of apparatus 500 configured as computing device, rather than as a processor. Processor 530, in such case, may be in operative communication with means 550-560, and components thereof, via a bus 510 or similar communication coupling. Processor 530 may effect initiation and scheduling of the processes or functions performed by means 650-560, and components thereof.

In further related aspects, apparatus 500 may optionally include a means for storing information, such as, for example, a memory device/module 540. Computer readable medium or memory device/module 540 may be operatively coupled to the other components of apparatus 500 via bus 510 or the like. The computer readable medium or memory device 540 may be adapted to store computer readable instructions and data for effecting the processes and behavior of means 550-560, and components thereof, or processor 530 (in the case of apparatus 500 configured as a computing device) or the methods disclosed herein.

In yet further related aspects, the memory module 540 may optionally include executable code for the processor module 530 to: (a) monitor peer-to-peer sites; (b) monitor sale activity of the media; and (c) generate a piracy score based on data obtained in steps (a) and (b). One or more of steps (a)-(c) may be performed by processor module 530 in lieu of or in conjunction with the means 550-560 described above.

In accordance with one or more embodiments of the present invention, there is provided an exemplary apparatus 600 that may be configured as either a computing device, or as a processor or similar device for use within a computing device. As illustrated, apparatus 600 may include: means for receiving a media identifier of a media and a device identifier from a first remote device executing the media; means for correlating the usage license with the media identifier and the device identifier; means for generating a sale metric for the media based on a number of usage license granted; means for determining a piracy metric of the media based on availability of illegal copies of the media; and means for charging a publisher of the media a fee based on the sale and piracy metrics.

In one embodiment, apparatus 600 may grant a usage license to a device identifier only if there is no pre-existing correlation between the software identifier and the device identifier. In this way, administrators may limit re-installation or disable the license of the media if a user attempts to install the same media on a different machine.

It is noted that apparatus 600 may optionally include a processor module 630 having at least one processor, in the case of apparatus 600 configured as computing device, rather than as a processor. Processor 630, in such case, may be in operative communication with means 650-675, and components thereof, via a bus 610 or similar communication coupling. Processor 630 may effect initiation and scheduling of the processes or functions performed by means 650-675, and components thereof.

In further related aspects, apparatus 600 may optionally include a means for storing information, such as, for example, a memory device/module 640. Computer readable medium or memory device/module 640 may be operatively coupled to the other components of apparatus 600 via bus 610 or the like. The computer readable medium or memory device 640 may be adapted to store computer readable instructions and data for effecting the processes and behavior of means 650-675, and components thereof, or processor 630 (in the case of apparatus 600 configured as a computing device) or the methods disclosed herein.

In yet further related aspects, the memory module 640 may optionally include executable code for the processor module 630 to: (a) receive a media identifier of a media and a device identifier from a first remote device executing the media; (b) correlate the usage license with the media identifier and the device identifier; (c) generate a sale metric for the media based on a number of usage license granted; (d) determine a piracy metric of the media based on availability of illegal copies of the media; and (e) charge a publisher of the media a fee based on the sale and piracy metrics. One or more of steps (a)-(e) may be performed by processor module 630 in lieu of or in conjunction with the means 650-675 described above.

As noted above, one or more of the techniques and methodologies described herein may be performed by embedded applications, platforms, or systems. The methods described herein may be performed by a general-purpose computer system and/or an embedded application or component of a special-purpose apparatus (e.g., traffic controller, traffic signal, surveillance cameras, sensors, detectors, vehicles, vehicle navigation systems, mobile phones, PDAs, etc.).

In one embodiment, the special-purpose device comprises an embedded platform running an embedded Linux operating system (OS) or the like. For example, the unique device identifier or fingerprint for the special-purpose device may be created by collecting and using one or more of the following information: machine model; processor model; processor details; processor speed; memory model; memory total; network model of each Ethernet interface; network MAC address of each Ethernet interface; BlackBox model (e.g., any Flash device); BlackBox serial (e.g., using Dallas Silicone Serial DS-2401 chipset or the like); OS install date; nonce value; nonce time of day; and any other predefined hardware information stored (optionally encrypted) in EEPROM; any variations/combinations thereof.

While the present invention has been illustrated and described with particularity in terms of preferred embodiments, it should be understood that no limitation of the scope of the invention is intended thereby. Features of any of the foregoing methods and devices may be substituted or added into the others, as will be apparent to those of skill in the art. It should also be understood that variations of the particular embodiments described herein incorporating the principles of the present invention will occur to those of ordinary skill in the art and yet be within the scope of the invention.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

It is understood that the specific order or hierarchy of steps in the processes disclosed herein in an example of exemplary approaches. Based upon design preferences, it is understood that the specific order or hierarchy of steps in the processes may be rearranged while remaining within the scope of the present disclosure. The accompanying method claims present elements of the various steps in sample order, and are not meant to be limited to the specific order or hierarchy presented.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical discs (e.g., compact disc (CD), digital versatile disc (DVD), etc.), smart cards, and flash memory devices (e.g., Erasable Programmable Read Only Memory (EPROM), card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A method for media activation, comprising:
receiving a media identifier of a media and a device identifier from a first remote device executing the media, the device identifier being based on a combination of at least one user-configurable parameter and at least one non-user-configurable parameter of the first remote device;
granting a usage license for the media to the first remote device;
correlating the usage license with the media identifier and the device identifier;
generating a sale metric for the media based on a number of usage license granted;
determining a piracy metric of the media based on availability of illegal copies of the media; and
charging a publisher of the media a fee based on the sale and piracy metrics.

2. The method claim 1, wherein determining the piracy metric comprises determining the availability of illegal copies of the media on a public network.

3. The method claim 2, wherein determining the piracy metric comprises estimating a number of illegally downloaded copies of the media on a peer-to-peer network.

4. The method claim 2, wherein determining the piracy metric comprises estimating a number of illegally downloaded copies of the media using torrent based application.

5. The method of claim 1, wherein the media comprises one or more items selected from the list consisting of music, software applications, movies, and books.

6. The method claim 1, wherein the at least one non-user-configurable parameter is based on a carbon degradation characteristic of a computer chip of the device.

7. The method claim 1, wherein the at least one non-user-configurable parameter is based on a carbon degradation characteristic of a computer chip of the device.

8. The method claim 1, wherein the at least one non-user-configurable parameter is based on a silicone degradation characteristic of a computer chip of the device.

9. The method claim 1, wherein the at least one user-configurable parameter comprises one of hard disk volume name, user name, device name, user password, and hard disk initialization date for the device.

10. The method claim 1, wherein the device identifier is generated by utilizing at least one irreversible transformation of the at least one user-configurable parameter and the at least one non-user-configurable parameter of the device.

11. The method claim 1, wherein the device identifier is generated by utilizing a cryptographic hash function on the at least one user-configurable parameter and the at least one non-user-configurable parameter of the device.

12. A computer readable medium having stored thereon, computer executable instructions that, if executed by a device, causes the device to perform a method comprising:
receiving a software identifier of a software and a device identifier from a first remote device executing the software, the device identifier being based on a combination of at least one user-configurable parameter and at least one non-user-configurable parameter of the first remote device;
granting a usage license for the software to the first remote device;
correlating the usage license with the software identifier and the device identifier;
generating a sale metric for the software based on a number of usage license granted;
determining a piracy metric of the software based on availability of illegal copies of the software; and
charging a publisher of the software a fee based on the sale and piracy metrics.

13. The computer readable medium of claim 12, wherein determining the piracy metric comprises determining the availability of illegal copies of the software on a public network.

14. The computer readable medium of claim 13, wherein determining the piracy metric comprises estimating a number of illegally downloaded copies of the software on a peer-to-peer network.

15. The computer readable medium of claim 13, wherein determining the piracy metric comprises estimating a number of illegally downloaded copies of the software using torrent based application.
